(19) **Europäisches Patentamt**
**European Patent Office**
**Office européen des brevets**

(11) **EP 1 622 253 B1**

(12) **EUROPEAN PATENT SPECIFICATION**

(45) Date of publication and mention
of the grant of the patent:
**10.10.2012 Bulletin 2012/41**

(51) Int Cl.:
*H02P 21/00* (2006.01)   *H02P 7/00* (2006.01)
*H02P 23/06* (2006.01)   *H02P 27/02* (2006.01)

(21) Application number: **05016675.0**

(22) Date of filing: **01.08.2005**

(54) **Control process and control device of induction motor, and steel/nonferrous facility, railway vehicle, winder, vessel, machine tool, paper machine facility and transport facility employing the control process and the control device**

Regelungsverfahren und Regelungsvorrichtung eines Induktionsmotors, und Stahl bzw. nichteisenhaltige Anlagen, Schienenfahrzeug, Wickler, Wasserfahrzeug, Maschinenwerkzeug, Papiermaschinenanlage und Transportanalge, die das Regelungsverfahren und die Regelungsvorrichtung einsetzen

Procédé de régulation et dispositif de régulation d'un moteur à induction, et acier ou non-ferreux, véhicule ferroviaire, enrouleuse, véhicule marin, implement de machine, système de machines de papier et système de transport employants la procédé de régulation et le dispositif de régulation

(84) Designated Contracting States:
**DE FR GB**

(30) Priority: **30.07.2004 JP 2004222831**
**30.07.2004 JP 2004223130**

(43) Date of publication of application:
**01.02.2006 Bulletin 2006/05**

(73) Proprietor: **Hitachi, Ltd.**
**Tokyo 100-8280 (JP)**

(72) Inventors:
• **Tobise, Masahiro**
**Chiyoda-ku**
**Tokyo 100-8220 (JP)**
• **Nagata, Hiroshi**
**Chiyoda-ku**
**Tokyo 100-8220 (JP)**
• **Kobayashi, Kiyotaka**
**Chiyoda-ku**
**Tokyo 100-8220 (JP)**
• **Yoshinari, Yoshitaka**
**Chiyoda-ku**
**Tokyo 100-8220 (JP)**
• **Nitobe, Mitsuhiro**
**Chiyoda-ku**
**Tokyo 100-8220 (JP)**

• **Matsumoto, Hisayuki**
**10-1, Shiba 4-chome,**
**Minato-ku,**
**Tokyo (JP)**
• **Ebihara, Kazumi**
**10-1, Shiba 4-chome,**
**Minato-ku,**
**Tokyo (JP)**

(74) Representative: **MERH-IP**
**Matias Erny Reichl Hoffmann**
**Paul-Heyse-Strasse 29**
**80336 München (DE)**

(56) References cited:
**US-A- 3 657 623    US-A- 5 796 236**
**US-A- 5 965 995**

• **XU X ET AL: "Stator flux orientation control of induction machines in the field weakening region" IEEE, 2 October 1988 (1988-10-02), pages 437-443, XP010519120**

EP 1 622 253 B1

- YUSIVAR F ET AL: "Iq added flux weakening strategy for the rotor flux oriented control of a sinusoidal PWM VSI-fed induction motor" IECON'01. PROCEEDINGS OF THE 27TH. ANNUAL CONFERENCE OF THE IEEE INDUSTRIAL ELECTRONICS SOCIETY. DENVER, CO, NOV. 29 - DEC. 2, 2001, ANNUAL CONFERENCE OF THE IEEE INDUSTRIAL ELECTRONICS SOCIETY, NEW YORK, NY : IEEE, US, vol. VOL. 1 OF 3. CONF. 27, 29 November 2001 (2001-11-29), pages 1160-1165, XP010572942 ISBN: 0-7803-7108-9

- FERNANDO BRIZ ET AL: "Current and Flux Regulation in Field-Weakening Operation" IEEE TRANSACTIONS ON INDUSTRY APPLICATIONS, IEEE SERVICE CENTER, PISCATAWAY, NJ, US, vol. 37, no. 1, January 2001 (2001-01), XP011022888 ISSN: 0093-9994

**Description**

BACKGROUND OF THE INVENTION

1. Field of the Invention

The present invention relates to a control process and a control device of an induction motor. More specifically, the present invention relates to a control process of an induction motor under vector control, and a control device performing the process.

2. Description of the Related Art

A known vector control scheme for induction motors is the most common scheme for DC separately excited motors. Specifically, an induction motor operates at constant torque until the rotational speed of the induction motor reaches its rated rotational speed (referred to as "base speed"). In addition, once the rotational speed exceeds the base speed, the induction motor operates at a constant output. Note that the rated rotational speed (base speed) is defined as a minimum rotational speed when the induction motor operates at a constant output, and it is used as a reference output (see "Application variable speed AC motor to a rolling mill" disclosed in "Denki Gakkai Gijutsu Hokoku" No. 935, pp29 (August, 2003) published by the Institute of Electrical Engineers of Japan).

The US 5796236 relates to a slip adjuster for use in electrical motor controllers, wherein two tables for determining ideal flux and flux current levels as a function of motor speed are provided. In order to determine an actual rotor inductance required for calculating the slip values from those tables are used.

The US 3657623 relates to a system for tracking mill stands motor currents for optimizing the duty cycle, wherein said wheel motor is monitored for accelerating and load currents in the full and the weakened field range.

The US 5965995 relates to a transient inductance tuner for a motor control, wherein the q-axis feedback and command voltages are monitored and, based on an error therebetween, a transient inductance estimate is modified to compensate for the error.

When an induction motor operates at a constant output and at a speed equal to/more than a base speed, the internal induced electromotive force generated by the induction motor is kept constant. It is therefore difficult for an induction motor to provide an output equal to/more than its rated output.

In order to overcome the above disadvantage, the present invention has been conceived. An object of the present invention is to provide a control device and a control process of induction motors which both make it possible to produce a high power output, that is, an output more than its rated output. An additional object of the present invention is to provide a steel/nonferrous facility, a railway vehicle, a winder, a vessel, a machine tool, a paper machine facility and a transport facility, each of which has a power induction motor controlled by the above control process and device.

SUMMARY OF THE INVENTION

The aforesaid objects are achieved by the independent claims. The dependent claims relate to preferred embodiments.

According to another aspect of the present invention, there is provided, a steel/nonferrous facility, a railway vehicle, a winder, a vessel, a machine tool, a paper machine facility, and/or a transport facility, each of which has a drive induction motor that is controlled by any of the above control devices.

With the above-described control processes and devices, induction motors can obtain a high power output. In addition, it is possible to provide a steel/nonferrous facility, a railway vehicle, a winder, a vessel, a machine tool, a paper machine facility and/or a transport facility, each of which has a power induction motor of a high power output.

BRIEF DESCRIPTION OF THE DRAWINGS

For more complete understanding of the present invention and the advantages hereof, reference is now made to the following description taken in conjunction with the accompanying drawings wherein:

Fig. 1 is a block diagram of a whole system including a control system of an induction motor according to a first embodiment of the present invention;
Fig. 2 is a T-equivalent circuit of an induction motor shown in Fig. 1;
Fig. 3 is a vector diagram of the T-equivalent circuit shown in Fig. 2;
Fig. 4 is a graph showing operational characteristics of an induction motor of a comparative example and the induction motor according to the embodiment of the invention;

Fig. 5 is a block diagram of a whole system including a control system of an induction motor relating to background of the present invention;

Fig. 6 is a graph showing the operational characteristics of the induction motor of the comparative example and the induction motor according Fig. 5;

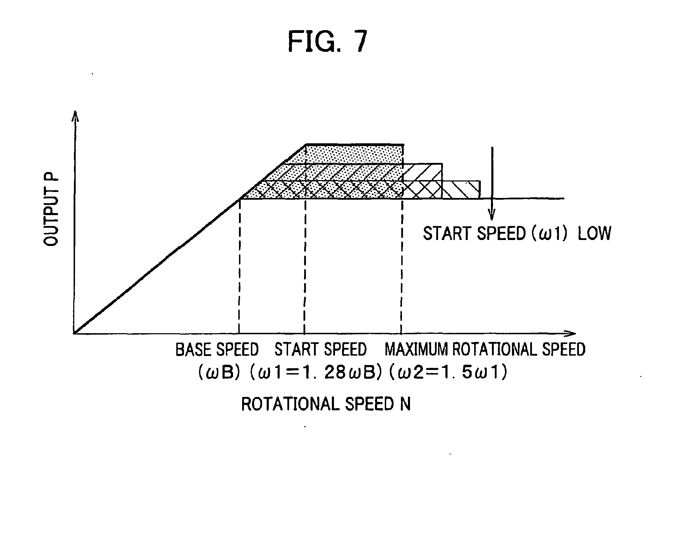

Fig. 7 is a graph showing a relation between a rotational speed and an output of the induction motor according to Fig. 5 when a start speed shown in Fig. 6 is varied.

DETAILED DESCRIPTION OF THE EXEMPLARY EMBODIMENTS OF THE INVENTION

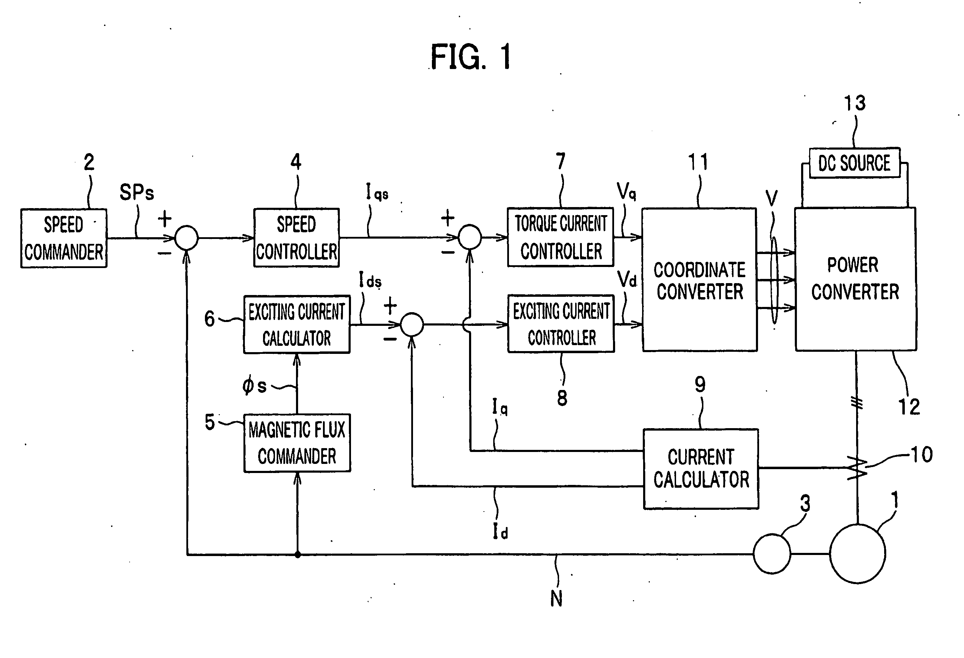

A description will be given below, of a control device of an induction motor according to an embodiment of the present invention, with reference to attached drawings. Referring to Fig. 1, an induction motor 1 is driven in compliance with a speed command SPs from a speed commander 2. This speed command SPs indicates a targeted value of a rotational speed N (r/min). Typical applications of this induction motor 1 include steel/nonferrous facilities (hot rolling facilities, cool rolling facilities and processing line facilities), railway vehicles, winders (or rewinders), vessels, machine tools (for driving a shaft), paper machine facilities and transport facilities.

A speed controller 4 generates a toque current command Iqs, based on the value (SPs-N) obtained by subtracting a rotational speed N from the speed command SPs. Then, it outputs the toque current command Iqs to a torque current controller 7. In this case, the rotational speed N is sensed by a speed sensor 3.

A magnetic flux commander 5 generates a magnetic flux command φs regarding a magnetic field, based on the rotational speed N sensed by the speed sensor. Then, it outputs the magnetic flux command φs to an exciting current calculator 6. Subsequently, the exciting current calculator 6 calculates an exciting current required for the induction motor 1, based on the magnetic flux command φs from magnetic flux commander 5. Then, the exciting current calculator 6 generates an exciting current command Ids and, then outputs it to an exciting current controller 8.

A current calculator 9 calculates a torque current Iq and an exciting current Id, based on a primary current (stator current) flowing through the induction motor 1 which is sensed by a current sensor 10. Specifically, the current calculator 9 decomposes a line current conducted through the induction motor 1 into a direct-axis (d-axis) component and a quadrature-axis (q-axis) component. These coordinate systems turn in sync with the output frequency of a power converter 12. Furthermore, the current calculator 9 outputs the calculated values of torque and exciting currents Iq and Id.

The torque current controller 7 outputs, to a coordinate converter 11, a torque voltage command Vq for allowing the torque current Iq from the current calculator 9 to follow the torque current command Iqs from the speed controller 4. The exciting current controller 8 outputs, to the coordinate converter 11, an exciting voltage command Vd for allowing the exciting current Id from the current calculator 9 to follow the exciting current command Ids from the exciting current calculator 6. The output frequency of the current calculator 9 can be set by a known technique. Therefore, components related to the setting of the output frequency are not illustrated in detail in this figure.

The coordinate converter 11 subjects the torque voltage command Vq and exciting voltage command Vd to a fixed coordinate system transform. Then, it generates a three-phase voltage command V. Subsequently, the coordinate converter 11 outputs the three-phase voltage command V to the power converter 12. The power converter 12 may be a pulse width modulation (PWM) inverter.

The power converter 12 subjects the power of a DC source 13 to a predetermined transformation, such as the PWM transformation, in response to the voltage command V. Then, it supplies the three-phase AC power to the induction motor 1. In this way, the primary current of the induction motor 1 is regulated, so that the speed of the induction motor 1 is controlled.

The features of the magnetic flux commander 5 are described as follows. The magnetic flux commander 5 increases its internal induced electromotive force in proportion to the increase in the rotational speed of the induction motor 1 in a strong magnetic field control region (described later). Once the internal induced electromotive force exceeds that at the base speed, the magnetic flux commander 5 weakens the magnetic flux under vector control. Further, the magnetic flux commander 5 changes the internal induced electromotive force to more than that at the base speed under the vector control in a magnetic field weakening control region (described later).

Thus, the magnetic flux commander 5 outputs the magnetic flux command φs to weaken the magnetic field, when the rotational speed N is greater than the base speed. In other words, the magnetic flux commander 5 outputs the magnetic flux command φs to perform the vector control so as to keep strengthening the magnetic field, even when the rotational speed is greater than the base speed.

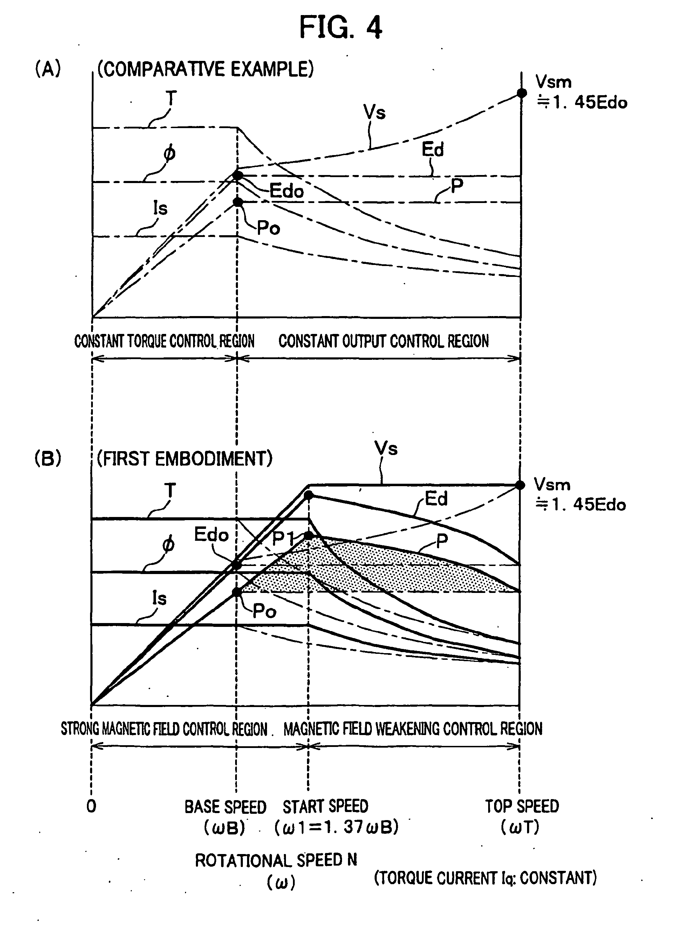

The magnetic flux commander 5 changes the magnetic field in the magnetic field weakening state, so that the internal induced electromotive force generated by the induction motor 1 exceeds that at the base speed. At the same time, the magnetic flux commander 5 weakens the magnetic field to prevent the terminal voltage of the induction motor 1 from exceeding the maximum voltage at the maximum load due to the increase in the rotational speed N. As a result, the magnetic field of the induction motor 1 changes, so that the induction motor 1 provides operational characteristics of Fig. 4 (B) (described later).

The control device of the induction motor 1 may incorporate the components 4 to 9 and 11 shown in Fig. 1. The control device may be implemented by an analog circuit, a micro computer, or a single IC.

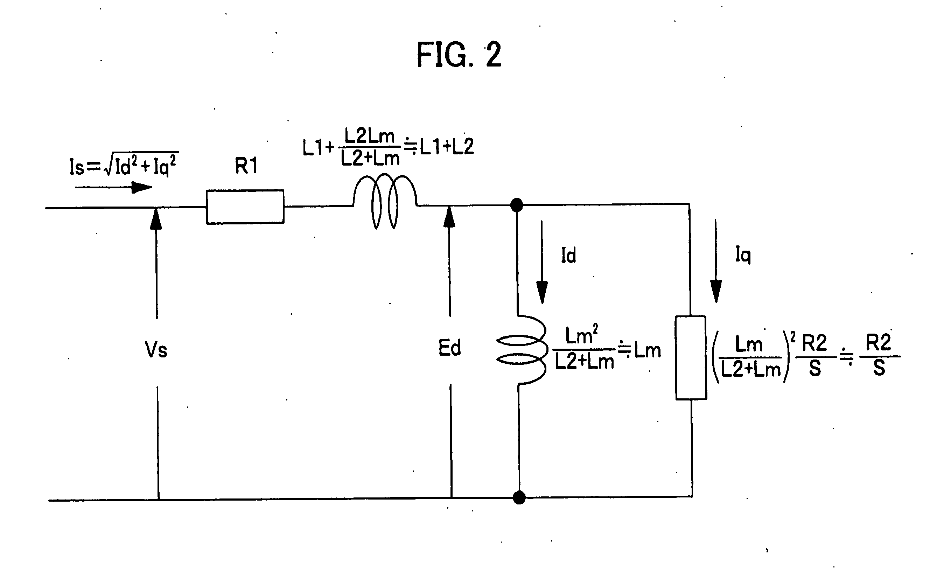

Next, a description will be given below, of an equivalent circuit of the induction motor 1. Referring to Fig. 2, the exciting current Id flows through an exciting circuit, and the torque current Iq is fed to a stator circuit. The exciting circuit includes an exciting circuit inductance Lm, and the stator circuit includes a resistance (R2/S) obtained by dividing the stator circuit resistor R2 by a slip S. Furthermore, a primary current (stator current), which equals the root sum square of the exciting current Id and the torque current Iq, flows through a stator coil.

In this figure, Vs, R1, L1, L2 and Ed refers to a terminal voltage, a stator circuit resistance, stator circuit inductance, a rotor circuit inductance and an internal induced electromotive force (exciting circuit voltage).

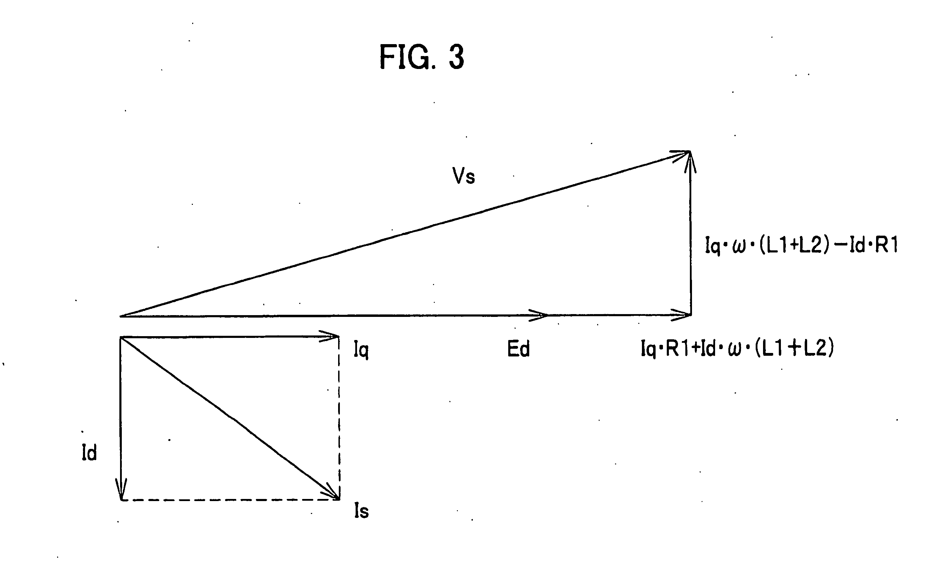

A relation between a current and a voltage of the T-equivalent circuit is shown in a vector diagram of Fig. 3. This vector diagram defines the relation between the terminal voltage Vs and the internal induced electromotive force Ed. Based on this diagram, the magnetic flux commander 5 outputs the appropriate magnetic flux command $\phi$s. In addition, "$\omega$" refers to a power source angular frequency in this figure.

A description will be given below, of operating characteristics of the induction motor 1, in comparison with those of a comparative example.

In Fig. 4, its horizontal axis denotes the rotational speed N, and its longitudinal axis denotes the torque T, magnetic field $\phi$, primary current Is, terminal voltage Vs, and internal induced electromotive force Ed.

Referring to Fig. 4 (A), there are two regions; a constant torque control region and a constant output control region. The former region corresponds to a region where the rotational speed N does not reach the base speed (or power source angular frequency $\omega$B), and the torque T is kept constant (constant torque operation). The latter region corresponds to a region where the rotational speed N exceeds the base speed, and the output P is kept constant (constant output operation). In this figure, the torque current Iq is constant. Furthermore, the magnetic field $\phi$ is constant in the constant torque control region, while it is weakened in indirect proportion to the rotational speed N in the constant output control region.

In the above constant output control region, even when the magnetic field $\phi$ decreases, the internal induced electromotive force ED is kept at a constant value Edo. This Edo equals to the internal induced electromotive force Ed at the base speed. In this state, the terminal voltage Vs inevitably increases in accordance with the increase in the rotational speed N. Also, the terminal voltage Vs inevitably increases in accordance with the magnitude of the primary current Is. The terminal voltage Vs shows a maximum voltage Vsm, that is, the maximum value at the maximum load. In this case, the rotational speed N (or power source angular frequency $\omega$T) is called "top speed".

The absolute value of the terminal voltage Vs shown in Fig. 4 (A) is expressed by the following equation (1), based on the vector diagram of Fig. 3:

$$\text{Vs} \cong \text{Edo} \cdot [\ 1 + \{\ \%Z \cdot (Iq/Iqo) \cdot (\omega/\omega B)\}\ ^2]\ ^{1/2} \qquad (1)$$

where %Z, Edo and $\omega$B are percent impedance, internal induced electro motive force at the base speed, and power source angular frequency at the base speed, respectively. In this equation, the slip frequency component of the induction motor 1 is ignored for simplification sake.

%Z and Edo of equation (1) are given by the following equations (2) and (3), respectively:

$$\%Z = Iqo \cdot \omega B \cdot (L1+L2)/Edo \qquad (2)$$

$$Edo = Ido \cdot \omega B \cdot Lm \qquad (3)$$

Since Ed equals Edo in the constant output control region of Fig. 4 (A) ($\omega \geq \omega B$), the equation (1) indicates the following relations:

$$Iq \cdot R1/Edo + (L1+L2)/Lm \ll 1 \qquad (4)$$

$$Id \cdot R1/Edo \ll \%Z \cdot (Iq/Iqo) \cdot (\omega/\omega B) \qquad (5)$$

In Fig. 4 (A), let %Z=0.2 (20%), Iq/Iqo=1.75 (175%), and $\omega/\omega B$=3: then Vsm $\cong$ 1.45Edo.

where Vsm is the maximum value of the terminal voltage Vs.

Accordingly, in the control process shown in Fig. 4 (A), if the maximum output voltage of the power converter 12 equals Vs of the equation (1), the internal induced electromotive force Edo equals the maximum output voltage of the power converter being divided by 1.45. Therefore, the output P (=$3^{1/2}$·Vs·Is) of the induced electromotive force is (1/1.45) times as high as the maximum output voltage of the power converter 12. Thus, the output P is limited.

Next, a description will be given below, of operational characteristics of an induction motor according to the embodiment of the present invention, with reference to Fig. 4 (B). In this embodiment, main conditions are the same as those of the comparative example shown in Fig. 4 (A), and concretely, %Z=0.2 (20%), Iq/Iqo=1.75 (175%), $\omega/\omega B$=3, and the maximum voltage Vsm of the terminal voltage Vs $\cong$ 1.45Edo are conditioned. Referring to Fig. 4 (B), the dashed line denotes the operational characteristics of the comparative example of Fig. 4 (A).

The characteristics of Fig. 4 (B) differs from those of Fig. 4 (A) in that the constant torque region extends to a start speed point (power source angular frequency $\omega1>\omega B$). Furthermore, over the start speed point (magnetic field weakening region), the vector control is performed to weaken the magnetic field $\phi$. Within this region, the internal induced electromotive force Ed is greater than the internal induced electromotive force. In the description of Fig. 4 (B), the constant torque control region below the start speed point is called "strong magnetic field control region", and a region over the start speed point is called "magnetic field weakening control region".

Based on the vector diagram of Fig. 3, a general equation (6) which evaluates the absolute value of terminal voltage Vs in the magnetic field weakening region ($\omega\geq\omega1$) of Fig. 4 (B) is given as follow:

$$\text{Vs} \cong \text{Edo}\cdot[\ \text{Ed/Edo}+\{\ \%Z\cdot(\text{Iq/Iqo})\cdot(\omega/\omega B)\}^{\ 2}]^{\ 1/2} \qquad (6)$$

where %Z and Edo are expressed by the equations (2) and (3), respectively.

Since Ed equals $\alpha$Edo in the magnetic field weakening region ($\omega\geq\omega1$) of Fig. 4 (B), the equation (6) shows the following relations:

$$\text{Iq}\cdot\text{R1/Edo}+(\text{L1}+\text{L2})/\text{Lm}<<1 \qquad (7)$$

$$\text{Id}\cdot\text{R1/Edo}<<\%Z\cdot(\text{Iq/Iqo})\cdot(\omega/\omega B) \qquad (8)$$

where 1.0<$\alpha$<2.0.

In the constant toque control region ($\omega<\omega1$) of Fig. 4 (B), the following relation is established:

$$\text{Ed/Edo}=\omega/\omega B \qquad (9)$$

If the equation (9) is substituted into the equation (6), an equation (10), which evaluates the maximum voltage (absolute value) Vsm, that is, the terminal voltage Vs at the start speed point (power source angular frequency $\omega1$) shown in Fig. 4 (B), is given as follows:

$$\text{Vsm} \cong \text{Ed}\cdot[\ 1+\{\ \%Z\cdot(\text{Iq/Iqo})\}^{\ 2}]^{\ 1/2} \qquad (10)$$

Assume Vsm equals Vsm of Fig. 4 (A) (=1.45Edo or $\alpha$=1.45) in the equation (10), the equation (6) can be expressed by the following equation (11):

$$\text{Ed}\cdot[\ 1+\{\ \%Z\cdot(\text{Iq/Iqo})\}^{\ 2}]^{\ 1/2}=1.45\text{Edo} \qquad (11)$$

The reason why $\alpha$=1.45 is to compare the characteristics of Fig. 4 (A) and those of Fig. 4 (B) on the same conditions. $\alpha$ may be set arbitrarily within the range of 1.0<$\alpha$<2.0.

When the magnetic field weakening control region of Fig. 4 (B) starts, the magnetic flux commander 5 of Fig.

1 outputs the magnetic flux command φs to the exciting current calculator 6 so as to meet the relation expressed by the equation (11). This enables the internal induced electromotive force Ed to be greater than Edo within the magnetic field weakening control region.

In Fig. 4 (B), %Z equals 0.2 and Iq/Iqo equals 1.75. If these values are substituted into the equation (11), the maximum value of the internal induced electromotive force has the following relation:

$$Ed = 1.37 \cdot Edo \qquad\qquad (12)$$

where %Z and Iq/Iqo are not limited to these values, but may have various values by using a known technique.

In this case, the start speed (power source angular frequency ω1) can be evaluated as 1.37ωB by using the equation (9). Accordingly, the output P1 of the induction motor 1 is 1.37 times as great as its rated output. When the rotational speed N exceeds the start speed, Vs of the equation (6) equals Vsm of the equation (10), in other words, the magnetic field φ is weakened. The hatch pattern area of Fig. 4 (B) indicates the area where the output exceeds the rated output P.

As described above, the output capacity within the magnetic field weakening control region of Fig. 4 (B) exceeds that within the constant output control region of Fig. 4 (A). This makes it possible to provide the output of the induction motor 1 that is greater than its rated output. Moreover, since the terminal voltage Vs of the Fig. 4 (B) is kept at a constant value Vsm, regardless of the rotational speed N, the dielectric voltage of the induction motor 1 does not need to be changed.

The induction motor 1 can be applied, as a power source, to steel/nonferrous facilities (hot rolling facilities, cool rolling facilities and processing line facilities), railway vehicles, winders (or rewinders), vessels, machine tools (for driving a shaft), paper machine facilities, and transport facilities. Thus, the induction motor 1 of the operational characteristics shown in Fig. 4 (B) can be used in a wide range of applications required for various output capacities.

It is possible to change the maximum output P1 of the induction motor 1 by varying the start speed shown in Fig. 4 (B) on the condition that the terminal voltage Vs shown in Fig. 4 (B) does not exceed the maximum voltage Vsm. Moreover, the induction motor having a minimum rated output P is used for power sources of various applications, thereby decreasing the cost of the induction motor 1.

Note that α is 1.45 in Fig. 4 (B), but α may lie within the range from 1.0 to 2.0. In this case, the output P can be varied within the magnetic field weakening control range.

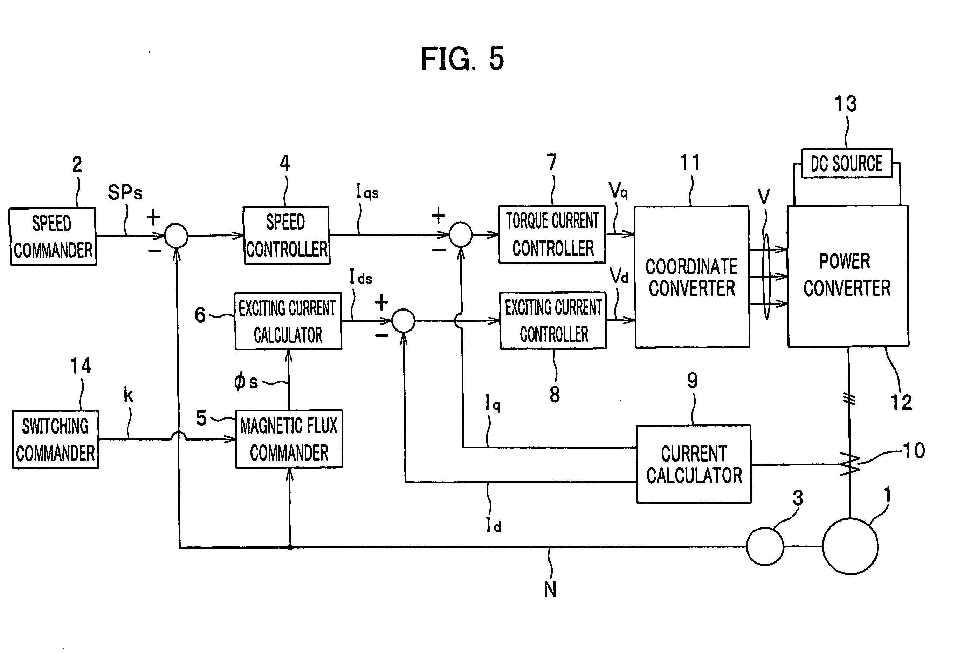

A description will be given below, of a control device of an induction motor according to an example relating to background of the present invention with reference to attached drawings. Referring to Fig. 5, a control device of this example differs from that of the embodiment in that a switching commander 14 is provided. Although a description of the example partially overlaps that of the embodiment, each component will be described in turns.

In Fig. 5, an induction motor 1 is driven in compliance with a speed command SPs from a speed commander 2. This speed command SPs indicates a targeted value of a rotational speed N (r/min). Typical applications of this induction motor 1 include steel/nonferrous facilities (hot rolling facilities, cool rolling facilities and processing line facilities), railway vehicles, winders (or rewinders), vessels, machine tools (for driving a shaft), paper machine facilities and transport facilities.

A speed controller 4 generates a torque current command Iqs, based on the value (SPs-N) obtained by subtracting a rotational speed N from the speed command SPs. Then, it outputs the torque current command Iqs to a torque current controller 7. In this case, the rotational speed N is sensed by a speed sensor 3.

A magnetic flux commander 5 generates a magnetic flux command φs regarding a magnetic field, based on the rotational speed N sensed by the speed sensor 3 and a switching signal k from the switching commander 14. Then, it outputs the magnetic flux command φs to an exciting current calculator 6. The switching signal k indicates timing of switching exciting modes. In this case, the switching signal k is the rotational speed N, but alternatively, it may be information on the rotational speed N if the rotational speed N is defined beforehand.

The magnetic flux commander 5 contains, in advance, information on relation between the rotational speed N and the switching signal k, that is, information on the rotational speed N at the time of switching the exciting modes.

The exciting current calculator 6 calculates an exciting current required for the induction motor 1, based on the magnetic flux command φs from the magnetic flux commander 5. Then, the exciting current calculator 6 generates an exciting current command Ids and, then outputs it to an exciting current controller 8.

A current calculator 9 calculates a torque current Iq and an exciting current Id, based on a primary current (stator current) flowing through the induction motor 1 which is sensed by a current sensor 10. Specifically, the current calculator 9 decomposes a line current conducted through the induction motor 1 into a direct-axis (d-axis) component and a quadrature-axis (q-axis) component. These coordinate systems turn in sync with the output frequency of a power converter 12. Furthermore, the current calculator 9 outputs the calculated values of torque and exciting currents Iq and Id.

The torque current controller 7 outputs, to a coordinate converter 11, a torque voltage command Vq for allowing the torque current Iq from the current calculator 9 to follow the torque current command Iqs from the speed controller 4. The exciting current controller 8 outputs, to the coordinate converter 11, an exciting voltage command Vd for allowing the exciting current Id from the current calculator 9 to follow the exciting current command Ids from the exciting current calculator 6. The output frequency of the current calculator 9 can be set by a known technique. Therefore, components related to the setting of the output frequency are not illustrated in detail in this figure.

The coordinate converter 11 subjects the torque voltage command Vq and exciting voltage command Vd to a fixed coordinate system transform. Then, it generates a three-phase voltage command V. Subsequently, the coordinate converter 11 outputs the three-phase voltage command V to the power converter 12. The power converter 12 may be a pulse width modulation (PWM) inverter.

The power converter 12 subjects the power of a DC source 13 to a predetermined transformation, such as the PWM transformation, in response to the voltage command V. Then, it supplies the three-phase AC power to the induction motor 1. In this way, the primary current of the induction motor 1 is regulated, so that the speed of the induction motor 1 is controlled.

The feature of the magnetic flux commander 5 is described as follows. In the strong magnetic field control region, the magnetic flux commander 5 increases its internal induced electromotive force in proportion to the increase in the rotational speed N of the induction motor 1. Once the internal induced electromotive force exceeds that at the base speed, the magnetic flux commander 5 outputs the magnetic flux command φs to switch the vector controls so as to weaken the magnetic flux. This enables the constant torque control to be performed in the strong magnetic field control region.

In the magnetic field weakening control region, the magnetic flux commander 5 outputs the magnetic flux command φs to perform the vector control so as to make the internal induced electromotive force constant at the time of switching to the magnetic field weakening control. Furthermore, the magnetic flux commander 5 weakens the magnetic field in indirect proportion to the increase in the rotational speed N, after the magnetic field weakening control starts. As a result, it is possible to perform the constant output control that renders the output of the induction motor 1 constant in the magnetic field weakening control region.

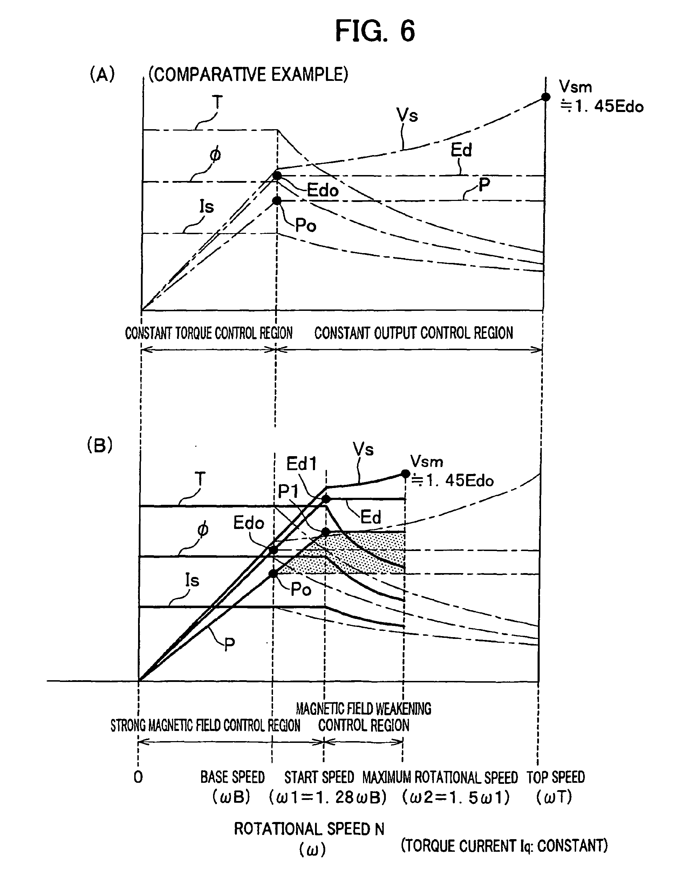

In this way, the magnetic field generated by the induction motor 1 changes, so that the induction motor 1 provides operational characteristics of Fig. 6 (B) (described later).

The control device of the induction motor 1 may incorporate the components 4 to 9 and 11 shown in Fig. 5. The control device may be implemented by an analog circuit, a micro computer, or a single IC.

An equivalent circuit of the induction motor 1 is similar to that shown in Fig. 2, and it has already been described. The exciting current Id flows through an exciting circuit, and the torque current Iq is fed to a stator circuit. The exciting circuit includes an exciting circuit inductance Lm, and the stator circuit includes a resistance (R2/S) obtained by dividing the stator circuit resistor R2 by a slip S. Furthermore, a primary current (stator current), which equals the root sum square of the exciting current Id and the torque current Iq, flows through a stator coil.

A relation between a current and a voltage of the equivalent circuit of the induction motor 1 is similar to that having been described with reference to the vector diagram of Fig. 3. This vector diagram defines the relation between the terminal voltage Vs and the internal induced electromotive force Ed. Based on this diagram, the magnetic flux commander 5 outputs the appropriate magnetic flux command φs.

Next, a description will be given below, of operating characteristics of the induction motor 1 of this example, in comparison with those of a comparative example.

In Fig. 6, its horizontal axis denotes the rotational speed N, and its longitudinal axis denotes the torque T, magnetic field φ, primary current Is, terminal voltage Vs, and internal induced electromotive force Ed.

Referring to Fig. 6 (A), there are two regions; a constant torque control region and a constant output control region. The former region corresponds to a region where the rotational speed N does not reach the base speed (or power source angular frequency ωB), and the torque T is kept constant (constant torque operation) within this region. The latter region corresponds to a region where the rotational speed N exceeds the base speed, and the output P is kept constant (constant output operation). Furthermore, the magnetic field φ is constant in the constant torque control region, while it is weakened in indirect proportion to the rotational speed N in the constant output control region.

In the above constant output control region, even when the magnetic field φ decreases, the internal induced electromotive force Ed is kept at a constant value Edo. This Edo equals to the internal induced electromotive force Ed at the base speed. In this state, the terminal voltage Vs inevitably increases in accordance with the increase in the rotational speed N. Also, the terminal voltage Vs inevitably increases in accordance with the magnitude of the primary current Is. The terminal voltage Vs shows a maximum voltage Vsm, that is, the maximum value at the maximum load. In this case, the rotational speed N (or power source angular frequency ωT) is called "top speed".

The absolute value of the terminal voltage Vs shown in Fig. 6 (A) is expressed by the following equation (13), based on the vector diagram of Fig. 3:

$$Vs \cong Edo \cdot [ 1+\{ \%Z \cdot (Iq/Iqo) \cdot (\omega/\omega B)\}^2]^{1/2} \qquad (13)$$

where %Z, Edo and $\omega$B are percent impedance, internal induced electro motive force at the base speed, and power source angular frequency at the base speed, respectively. In this equation, the slip frequency component of the induction motor 1 is ignored for simplification sake.

%Z and Edo of equation (13) are given by the following equations (14) and (15), respectively:

$$\%Z=Iqo \cdot \omega B \cdot (L1+L2)/Edo \qquad (14)$$

$$Edo=Ido \cdot \omega B \cdot Lm \qquad (15)$$

Since Ed equals Edo in the constant output control region of Fig. 6 (A) ($\omega \geq \omega$B), the equation (13) indicates the following relations:

$$Iq \cdot R1/Edo+(L1+L2)/Lm<<1 \qquad (16)$$

$$Id \cdot R1/Edo<<\%Z \cdot (Iq/Iqo) \cdot (\omega/\omega B) \qquad (17)$$

In Fig. 6 (A), let %Z=0.2 (20%), Iq/Iqo=1.75 (175%), and $\omega/\omega$B=3: then Vsm$\cong$1.45Edo.

where Vsm is the maximum value of the terminal voltage Vs.

Accordingly, in the control process shown in Fig. 6 (A), if the maximum output voltage of the power converter 12 equals Vs of the equation (13), the internal induced electromotive force Edo equals (the maximum output voltage of the power converter) divided by 1.45. Therefore, the output P (=$3^{1/2} \cdot Vs \cdot Is$) of the induced electromotive force is (1/1.45) times as high as the maximum output voltage of the power converter 12. Thus, the output P is limited.

Next, a description will be given below, of operational characteristics of the induction motor according to the example of Fig. 5, with reference to Fig. 6 (B) . In this example, major conditions are the same as those of the comparative example shown in Fig. 6 (A), and concretely, %Z=0.2 (20%), Iq/Iqo=1.75 (175%), $\omega$1/$\omega$B=3, and the maximum voltage Vsm of the terminal voltage Vs $\cong$ 1.45Edo are conditioned. Referring to Fig. 6 (B), the dashed line denotes the operational characteristics of the comparative example of Fig. 6 (A).

The characteristics of Fig. 6 (B) differs from those of Fig. 6 (A) in that the constant torque region extends a start speed point (power source angular frequency $\omega$1>$\omega$B). Furthermore, over the start speed point (magnetic field weakening region), the vector control is performed to weaken the magnetic field $\phi$. Within this region, the internal induced electromotive force Ed is greater than Ed at the base speed, that is, the internal induced electromotive force Edo. In the description of Fig. 6 (B), the constant torque control region below the start speed point is called "strong magnetic field control region", and a region over the start speed point is called "magnetic field weakening control region".

When the constant output control starts, in other words, when switching to the magnetic field weakening control, the magnetic flux commander 5 outputs a magnetic flux command $\phi$s to the exciting current calculator 6 so as to meet a relation defined by an equation (18):

$$Ed \cdot [ 1+\{ \%Z \cdot (Iq/Iqo) \cdot (\omega2/\omega1)\}^2]^{1/2}=1.45Edo \qquad (18)$$

where $\omega$2 is the maximum rotational speed of the induction motor 1 within the magnetic field weakening control region, and %Z and Edo are expressed by the equations (14) and (15), respectively.

Because of this relation, the internal induced electromotive force Ed exceeds Edo.

Based on the vector diagram of Fig. 3, a general equation (19) which evaluates the absolute value of terminal voltage Vs in the constant output control region ($\omega \geq \omega$B) of Fig. 6 (B) is given as follow:

$$Vs \cong Edo \cdot [ Ed/Edo+\{ \%Z \cdot (Iq/Iqo) \cdot (\omega/\omega B)\}^2]^{1/2} \qquad (19)$$

Since Ed equals αEdo in the constant torque control region (ω≥ω1) of Fig. 6 (B), the equation (19) shows the following relations:

$$Iq \cdot R1/Edo + (L1+L2)/Lm << 1 \qquad (20)$$

$$Id \cdot R1/Edo << \%Z \cdot (Iq/Iqo) \cdot (\omega/\omega B) \qquad (21)$$

In the constant toque control region (ω<ω1) of Fig. 6 (B), the following relation is established:

$$Ed/Edo = \omega/\omega B \qquad (22)$$

Assume that ω2 = 1.5·ω1 (ω2 is the maximum rotational speed in the magnetic field weakening control region or the power source angular frequency), the following relation is established:

$$\omega 2/\omega B = Ed/Edo \cdot 1.5 \qquad (23)$$

Based on the equations (23) and (19), the terminal voltage Vs (absolute value) at ω2 is expressed by the following equation:

$$Vs \cong Ed \cdot [1 + \{\%Z \cdot (Iq/Iqo) \cdot 1.5\}^2]^{1/2} \qquad (24)$$

Put Vsm ≅ 1.45·Edo: then

$$Ed \cdot [1 + \{\%Z \cdot (Iq/Iqo) \cdot 1.5\}^2]^{1/2} = 1.45 \cdot Edo \qquad (25)$$

Accordingly, Ed is greater than Edo.
In Fig. 6 (B), %Z and Iq/Iqo are 0.2 and 1. 75, respectively. If these values are substituted into the equation (25), then the maximum value of the internal induced electromotive force Ed has the following relation:

$$Ed = 1.28 \cdot Edo \qquad (26)$$

The values of %Z, Iq/Iqo and ω2/ω1 are not limited to those of this embodiment, but they may be changed by using a known technique.
In this state, the start speed in the magnetic field weakening control region (or power source angular frequency ω1) can be evaluated to 1.28 ωB from the equation (22). Therefore, the output P of the induction motor 1 is 1.28 times greater than the rated output. Further, if the rotational speed N increases to exceed the start speed, then the magnetic field φ is weakened in indirect proportion to the rotational speed N, so that Vs of the equation (24) is not more than the maximum voltage Vsm (≅1.45Edo). In addition, the terminal voltage Vs is kept at a constant value Vsm, regardless of the rotational speed N, as shown in Fig. 6 (B). Consequently, the dielectric voltage of the induction motor 1 does not need to be changed. Note that the hatch pattern area of Fig. 6 (B) indicates the area where the output P exceeds the rated output Po.
In this way, it is possible to provide the output of the induction motor 1 that is greater than its rated output.
The induction motor 1 can be applied, as a power source, to steel/nonferrous facilities (hot rolling facilities, cool rolling facilities and processing line facilities), railway vehicles, winders (or rewinders), vessels, machine tools (for driving a shaft), paper machine facilities, and transport facilities. Thus, the induction motor 1 of the operational characteristics shown in Fig. 6 (B) can be used in a wide range of applications required for various output capacities. Moreover, the induction motor having a minimum rated output P is used for power sources of various applications, thereby decreasing the cost of the induction motor 1.

In Fig. 6 (B), the description has been given on the condition that the start speed $\omega1$ equals $1.28\omega B$, but the start speed $\omega1$ may be varied within a range from the base speed (power source angular frequency $\omega B$) to the top speed (power source angular frequency $\omega T$) shown in Fig. 5. In this case, the magnetic flux commander 5 shown in Fig. 5 selects a rotational speed in accordance with the switching signal k from the switching commander 14. Then, it outputs the magnetic flux command $\phi s$ to switch to the magnetic field weakening control when the rotational speed reaches the selected rotational speed. As a result, the output P covers a range shown in Fig. 5. In addition, as the start speed is lower, the high output range is wide but the minimum value of the output P is low. In such a manner, the output can be regulated.

Note that $\alpha$ is 1.45 in Fig. 6 (B), but $\alpha$ may lie within the range from 1 to 2.0. In this case, the output P can be varied within the constant torque output region.

**Claims**

1. A control process of an induction motor (1) which includes performing magnetic field weakening control by using vector control when a magnetic field generated by the induction motor (1) is in a strong magnetic field state, said control process comprising:

   increasing an internal induced electromotive force (Ed) in proportion to an increase in a rotational speed (N) of the induction motor (1) in the strong magnetic field state up to a start speed ($\omega1$) during which state the motor is in a constant torque region and
   exercising the magnetic field weakening control for rotational speeds larger than the start speed ($\omega1$),
   **characterized in that**
   the start speed ($\omega1$) is a rotational speed being larger than a base speed ($\omega B$) of the induction motor (1) so that the internal induced electromotive force (Ed) is varied to exceed its value (Edo) that it has at the base speed ($\omega B$) up to the start speed ($\omega1$) when increasing the internal induced electromotive force (Ed) in the strong magnetic field state thereby extending the constant torque region to a start speed point.

2. The control process according to claim 1, further comprising varying the magnetic field to satisfy equations (1) and (2) at the beginning of the magnetic field weakening control:

$$Ed[\ 1+\{\ \%Z\bullet Iq/Iqo\bullet\omega/\omega B\}^2]^{1/2} = \alpha Edo\ (\alpha>1,\ Iq:\ constant) \qquad (1)$$

$$\%Z=Iqo\bullet\omega B\bullet(L1+L2)/Edo \qquad (2)$$

   where Ed is the internal induced electromotive force, %Z is a percent impedance, Iq is a torque current, $\omega$ is a power source angular frequency of the rotational speed of the induction motor, $\omega B$ is a power source angular frequency of the induction motor at the base speed, Iqo is a rated torque current of the induction motor at the base speed, Edo is the internal induced electromotive force of the induction motor at the base speed, L1 is a stator circuit inductance, and L2 is a rotor circuit inductance.

3. The control process according to at least one of claims 1 through 2, further comprising weakening the magnetic field under the magnetic field weakening control, so that a terminal voltage (Vs) of the induction motor (1) which rises in proportion to an increase in the rotational speed (N) does not exceed a maximum voltage at a maximum load.

4. The control process according to at least one of claims 1 through 3, further comprising making a torque of the induction motor (1) constant under the strong magnetic field control.

5. A control device of an induction motor (1) which performs magnetic field weakening control by using vector control when a magnetic field generated by the induction motor (1) is in a strong magnetic field state, said control device comprising:

   a magnetic flux commander (5) for providing instructions on the magnetic field to increase an internal induced electromotive force (Ed) in proportion to an increase in a rotational speed (N) of the induction motor (1) in the strong magnetic field state up to a start speed ($\omega$1) during which state the motor is in a constant torque region; and to exercise the magnetic field weakening control for rotational speeds larger than the start speed ($\omega$1), **characterized in that** the start speed ($\omega$1) is a rotational speed being larger than a base speed ($\omega$B) of the induction motor (1) so that the internal induced electromotive force (Ed) is varied to exceed its value (Edo) that it has at the base speed (wB) when increasing the internal induced electromotive force (Ed) in the strong magnetic field state thereby extending the constant torque region to a start speed point

**6.** The control device according to claim 5, wherein the magnetic flux commander (5) varies the magnetic field to satisfy equations (1) and (2) at the beginning of the magnetic field weakening control:

$$Ed[\ 1+\{\ \%Z \bullet Iq/Iqo \bullet \omega/\omega B\}^2]^{1/2} = \alpha Edo\ (\alpha > 1,\ Iq:\ constant) \tag{1}$$

$$\%Z = Iqo \bullet \omega B \bullet (L1+L2)/Edo \tag{2}$$

where Ed is the internal induced electromotive force, %Z is a percent impedance, Iq is a torque current, $\omega$ is a power source angular frequency of the rotational speed of the induction motor, $\omega$B is a power source angular frequency of the induction motor at the base speed, Iqo is a rated torque current of the induction motor at the base speed, Edo is the internal induced electromotive force of the induction motor at the base speed, L1 is a stator circuit inductance, and L2 is a rotor circuit inductance.

**7.** The control device according to claim 5, wherein the magnetic flux commander (5) weakens the magnetic field under the magnetic field weakening control, so that a terminal voltage (Vs) of the induction motor (1) which rises in proportion to an increase in the rotational speed (N) does not exceed a maximum voltage at a maximum load.

**8.** The control device according to claim 5, wherein a torque of the induction motor (1) is kept constant in the strong magnetic field state.

**9.** A steel/nonferrous facility in which an induction motor (1) for driving a milling apparatus is controlled by the control device of at least one of claims 5 through 8.

**10.** A railway vehicle in which a drive induction motor (1) is controlled by the control device of at least one of claims 5 through 8.

**11.** A winder in which a drive induction motor (1) is controlled by the control device of at least one of claims 5 through 8.

**12.** A vessel in which a drive induction motor (1) is controlled by the control device of at least one of claims 5 through 8.

**13.** A machine tool in which an induction motor (1) for driving a main shaft is controlled by the control device of at least one of claims 5 through 8.

**14.** A paper machine facility in which a drive induction motor (1) is controlled by the control device of at least one of claims 5 through 8.

**15.** A transport facility in which a drive induction motor (1) is controlled by the control device of at least one of claims 5 through 8.

**Patentansprüche**

**1.** Regelungsvorgang eines Induktionsmotors (1), der das Durchführen einer Magnetfeldschwächungssteuerung unter Verwendung einer Vektorregelung einschließt, wenn sich ein vom Induktionsmotor (1) erzeugtes Magnetfeld in einem starken Magnetfeldzustand befindet, wobei der Regelungsvorgang umfasst:

Erhöhen einer internen induzierten elektromotorischen Kraft (Ed) proportional zu einer Erhöhung einer Drehzahl (N) des Induktionsmotors (1) im starken Magnetfeldzustand bis zu einer Anfangsdrehzahl ($\omega$1), während welchem Zustand sich der Motor in einem konstanten Drehmomentbereich befindet, und

Ausübung der Magnetfeldschwächungssteuerung für Drehzahlen, die größer als die Anfangsdrehzahl ($\omega$1) sind,

**dadurch gekennzeichnet, dass**

die Anfangsdrehzahl ($\omega$1) eine Drehzahl ist, die größer als eine Basisdrehzahl ($\omega$B) des Induktionsmotors (1) ist, so dass die interne induzierte elektromotorische Kraft (Ed) so variiert wird, dass sie ihren Wert (Edo) überschreitet, den sie bei der Basisdrehzahl ($\omega$B) bis zur Anfangsdrehzahl ($\omega$1) hat, wenn die interne induzierte elektromotorische Kraft (Ed) im starken Magnetfeldzustand erhöht wird, wodurch der konstante Drehmomentbereich bis zu einem Anfangsdrehzahlpunkt erweitert wird.

2. Regelungsvorgang nach Anspruch 1, weiterhin mit dem Variieren des Magnetfelds zur Erfüllung der Gleichungen (1) und (2) zu Beginn der Magnetfeldschwächungssteuerung:

$$Ed[\ 1+\{\%Z\cdot Iq/Iqo\cdot\omega/\omega B\}^2]^{1/2} = \alpha Edo\ (\alpha>1,\ Iq:\ konstant) \qquad (1)$$

$$\%Z=Iqo\cdot\omega B\cdot(L1+L2)/Edo \qquad (2)$$

worin Ed die interne induzierte elektromotorische Kraft ist; %Z ein Impedanzprozentsatz ist, Iq ein Drehmomentstrom ist, $\omega$ eine Leistungsquellenwinkelfrequenz der Drehzahl des Induktionsmotors ist, $\omega$B eine Leistungsquellenwinkelfrequenz des Induktionsmotors bei der Basisdrehzahl ist, Iqo ein Nenndrehmomentstrom des Induktionsmotors bei der Basisdrehzahl ist, Edo die interne induzierte elektromotorische Kraft des Induktionsmotors bei der Basisdrehzahl ist, L1 eine Statorschaltungsinduktivität ist und L2 eine Rotorschaltungsinduktivität ist.

3. Regelungsvorgang nach mindestens einem der Ansprüche 1 bis 2, weiterhin mit dem Schwächen des Magnetfelds unter der Magnetfeldschwächungssteuerung, so dass eine Klemmenspannung (Vs) des Induktionsmotors (1), die proportional zu einer Erhöhung der Drehzahl (N) ansteigt, eine Maximalspannung bei einer Maximallast nicht überschreitet.

4. Regelungsvorgang nach mindestens einem der Ansprüche 1 bis 3, weiterhin mit dem Konstantmachen eines Drehmoments des Induktionsmotors (1) unter der starken Magnetfeldregelung.

5. Regelungsvorrichtung eines Induktionsmotors (1), der eine Magnetfeldschwächungssteuerung unter Verwendung einer Vektorregelung durchführt, wenn sich ein vom Induktionsmotor (1) erzeugtes Magnetfeld in einem starken Magnetfeldzustand befindet, wobei die Regelungsvorrichtung umfasst:

einen Magnetflussregler (5) zum Bereitstellen von Anweisungen über das Magnetfeld zur Erhöhung einer internen induzierten elektromotorischen Kraft (Ed) proportional zu einer Erhöhung einer Drehzahl (N) des Induktionsmotors (1) im starken Magnetfeldzustand bis zu einer Anfangsdrehzahl ($\omega$1), während welchem Zustand sich der Motor in einem konstanten Drehmomentbereich befindet, und zur Ausübung der Magnetfeldschwächungssteuerung für Drehzahlen, die größer als die Anfangsdrehzahl ($\omega$1) sind,

**dadurch gekennzeichnet, dass**

die Anfangsdrehzahl ($\omega$1) eine Drehzahl ist, die größer als eine Basisdrehzahl ($\omega$B) des Induktionsmotors (1) ist, so dass die interne induzierte elektromotorische Kraft (Ed) so variiert wird, dass sie ihren Wert (Edo) überschreitet, den sie bei der Basisdrehzahl (mB) hat, wenn die interne induzierte elektromotorische Kraft (Ed) im starken Magnetfeldzustand erhöht wird, wodurch der konstante Drehmomentbereich bis zu einem Anfangsdrehzahlpunkt erweitert wird.

6. Regelungsvorrichtung nach Anspruch 5,

wobei der Magnetflussregler (5) das Magnetfeld variiert, um die Gleichungen (1) und (2) am Beginn der Magnetfeldschwächungssteuerung zu erfüllen:

$$Ed[\ 1+\{\%Z\cdot Iq/Iqo\cdot\omega/\omega B\}^2]^{1/2} = \alpha Edo\ (\alpha>1,\ Iq:\ konstant) \qquad (1)$$

$$\%Z = Iqo \cdot \omega B \cdot (L1 + L2)/Edo \qquad\qquad (2)$$

worin Ed die interne induzierte elektromotorische Kraft ist; %Z ein Impedanzprozentsatz ist, Iq ein Drehmomentstrom ist, $\omega$ eine Leistungsquellenwinkelfrequenz der Drehzahl des Induktionsmotors ist, $\omega$B eine Leistungsquellenwinkelfrequenz des Induktionsmotors bei der Basisdrehzahl ist, Iqo ein Nenndrehmomentstrom des Induktionsmotors bei der Basisdrehzahl ist, Edo die interne induzierte elektromotorische Kraft des Induktionsmotors bei der Basisdrehzahl ist, L1 eine Statorschaltungsinduktivität ist und L2 eine Rotorschaltungsinduktivität ist.

7. Regelungsvorrichtung nach Anspruch 5,
   wobei der Magnetflussregler (5) das Magnetfeld unter der Magnetfeldschwächungssteuerung schwächt, so dass eine Klemmenspannung (Vs) des Induktionsmotors (1), die proportional zu einer Erhöhung der Drehzahl (N) ansteigt, eine Maximalspannung bei einer Maximallast nicht überschreitet.

8. Regelungsvorrichtung nach Anspruch 5,
   wobei ein Drehmoment des Induktionsmotors (1) im starken Magnetfeldzustand konstant gehalten wird.

9. Stahl-/Nichteisenhaltige Anlage, in der ein Induktionsmotor (1) zum Antreiben eines Fräsgeräts von der Regelungsvorrichtung nach mindestens einem der Ansprüche 5 bis 8 geregelt wird.

10. Schienenfahrzeug, in dem ein Antriebsinduktionsmotor (1) von der Regelungsvorrichtung nach mindestens einem der Ansprüche 5 bis 8 geregelt wird.

11. Wickler, in dem ein Antriebsinduktionsmotor (1) von der Regelungsvorrichtung nach mindestens einem der Ansprüche 5 bis 8 geregelt wird.

12. Wasserfahrzeug, in dem ein Antriebsinduktionsmotor (1) von der Regelungsvorrichtung nach mindestens einem der Ansprüche 5 bis 8 geregelt wird.

13. Werkzeugmaschine, in der ein Antriebsinduktionsmotor (1) zum Antreiben einer Hauptwelle von der Regelungsvorrichtung nach mindestens einem der Ansprüche 5 bis 8 geregelt wird.

14. Papiermaschinenanlage, in der ein Antriebsinduktionsmotor (1) von der Regelungsvorrichtung nach mindestens einem der Ansprüche 5 bis 8 geregelt wird.

15. Transportanlage, in der ein Antriebsinduktionsmotor (1) von der Regelungsvorrichtung nach mindestens einem der Ansprüche 5 bis 8 geregelt wird.

**Revendications**

1. Procédé de commande d'un moteur à induction (1) lequel inclut l'exécution d'une commande d'affaiblissement de champ magnétique en utilisant une commande vectorielle lorsqu'un champ magnétique généré par le moteur à induction (1) est dans un état de champ magnétique puissant, ledit procédé de commande comportant les étapes consistant à :

   augmenter une force électromotrice induite interne (Ed) proportionnellement à une augmentation d'une vitesse de rotation (N) du moteur à induction (1) dans l'état de champ magnétique puissant jusqu'à une vitesse de démarrage ($\omega$1), le moteur étant dans une région de couple constant pendant le temps où il se trouve dans cet état, et
   exécuter la commande d'affaiblissement de champ magnétique pour des vitesses de rotation supérieures à la vitesse de démarrage ($\omega$1),
   **caractérisé en ce que**
   la vitesse de démarrage ($\omega$1) est une vitesse de rotation étant supérieure à une vitesse de base ($\omega$B) du moteur à induction (1) de sorte que la force électromotrice induite interne (Ed) varie pour dépasser sa valeur (Edo) à la vitesse de base ($\omega$B) jusqu'à la vitesse de démarrage ($\omega$1) lors de l'augmentation de la force électromotrice induite interne (Ed) dans l'état de champ magnétique puissant de manière à étendre la région de couple constant jusqu'à un point de vitesse de démarrage.

2. Procédé de commande selon la revendication 1, comportant en outre de faire varier le champ magnétique pour satisfaire aux équations (1) et (2) au début de la commande d'affaiblissement de champ magnétique :

$$\texttt{Ed[1+\{\%Z\bullet lq/lqo\bullet\omega/\omega B\}^2]^{1/2}=\alpha Edo(\alpha>1,lq:constante)\quad(1)}$$

$$\texttt{\%Z=lqo\bullet\omega B\bullet(L1+L2)/Edo}\qquad\qquad\qquad\texttt{(2)}$$

où Ed désigne la force électromotrice induite interne, %Z désigne une impédance exprimée en pourcentage, lq désigne un courant de couple, ω désigne une fréquence angulaire de source de puissance de la vitesse de rotation du moteur à induction, ωB désigne une fréquence angulaire de source de puissance du moteur à induction à la vitesse de base, lqo désigne un courant de couple nominal du moteur à induction à la vitesse de base, Edo désigne la force électromotrice induite interne du moteur à induction à la vitesse de base, L1 désigne une inductance de circuit de stator, et L2 désigne une inductance de circuit de rotor.

3. Procédé de commande selon au moins l'une des revendications 1 à 2, comportant en outre l'affaiblissement du champ magnétique sous la commande d'affaiblissement de champ magnétique, de sorte qu'une tension de borne (Vs) du moteur à induction (1) qui augmente proportionnellement à une augmentation de la vitesse de rotation (N) ne dépasse pas une tension maximum à une charge maximum.

4. Procédé de commande selon au moins l'une des revendications 1 à 3, comportant en outre d'amener un couple du moteur à induction (1) à être constant sous la commande de champ magnétique puissant.

5. Dispositif de commande d'un moteur à induction (1) lequel exécute une commande d'affaiblissement de champ magnétique en utilisant une commande vectorielle lorsqu'un champ magnétique généré par le moteur à induction (1) est dans un état de champ magnétique puissant, ledit dispositif de commande comportant :

un dispositif de commande de flux magnétique (5) pour délivrer des instructions sur le champ magnétique afin d'augmenter une force électromotrice induite interne (Ed) proportionnellement à une augmentation de la vitesse de rotation (N) du moteur à induction (1) dans l'état de champ magnétique puissant jusqu'à une vitesse de démarrage (ω1), le moteur étant dans une région de couple constant pendant le temps où il se trouve dans cet état, et pour exécuter la commande d'affaiblissement de champ magnétique pour des vitesses de rotation supérieures à la vitesse de démarrage (ω1),
**caractérisé en ce que**
la vitesse de démarrage (ω1) est une vitesse de rotation étant supérieure à une vitesse de base (ωB) du moteur à induction (1) de sorte que la force électromotrice induite interne (Ed) varie pour dépasser sa valeur (Edo) à la vitesse de base (ωB) lors de l'augmentation de la force électromotrice induite interne (Ed) dans l'état de champ magnétique puissant de manière à étendre la région de couple constant jusqu'à un point de vitesse de démarrage.

6. Dispositif de commande selon la revendication 5,
dans lequel le dispositif de commande de flux magnétique (5) fait varier le champ magnétique pour satisfaire aux équations (1) et (2) au début de la commande d'affaiblissement de champ magnétique :

$$\texttt{Ed[1+\{\%Z\bullet lq/lqo\bullet\omega/\omega B\}^2]^{1/2}=\alpha Edo(\alpha>1,lq:constante)\quad(1)}$$

$$\texttt{\%Z=lqo\bullet\omega B\bullet(L1+L2)/Edo}\qquad\qquad\qquad\texttt{(2)}$$

où Ed désigne la force électromotrice induite interne, %Z désigne une impédance exprimée en pourcentage, lq désigne un courant de couple, ω désigne une fréquence angulaire de source de puissance de la vitesse de rotation du moteur à induction, ωB désigne une fréquence angulaire de source de puissance du moteur à induction à la vitesse de base, Iqo désigne un courant de couple nominal du moteur à induction à la vitesse de base, Edo désigne la force électromotrice induite interne du moteur à induction à la vitesse de base, L1 désigne une inductance de circuit de stator, et L2 désigne une inductance de circuit de rotor.

**7.** Dispositif de commande selon la revendication 5,
dans lequel le dispositif de commande de flux magnétique (5) affaiblit le champ magnétique sous la commande d'affaiblissement de champ magnétique, de sorte qu'une tension de borne (Vs) du moteur à induction (1) qui augmente proportionnellement à une augmentation de la vitesse de rotation (N) ne dépasse pas une tension maximum à une charge maximum.

**8.** Dispositif de commande selon la revendication 5,
dans lequel un couple du moteur à induction (1) est maintenu constant dans l'état de champ magnétique puissant.

**9.** Installation d'acier/non-ferreux dans laquelle un moteur à induction (1) pour entraîner un appareil de fraisage est commandé par le dispositif de commande d'au moins l'une des revendications 5 à 8.

**10.** Véhicule ferroviaire dans lequel un moteur à induction d'entraînement (1) est commandé par le dispositif de commande d'au moins l'une des revendications 5 à 8.

**11.** Enrouleur dans lequel un moteur à induction d'entraînement (1) est commandé par le dispositif de commande d'au moins l'une des revendications 5 à 8.

**12.** Cuve dans laquelle un moteur à induction d'entraînement (1) est commandé par le dispositif de commande d'au moins l'une des revendications 5 à 8.

**13.** Machine-outil dans laquelle un moteur à induction (1) pour entraîner un arbre principal est commandé par le dispositif de commande d'au moins l'une des revendications 5 à 8.

**14.** Installation de machine à papier dans laquelle un moteur à induction d'entraînement (1) est commandé par le dispositif de commande d'au moins l'une des revendications 5 à 8.

**15.** Infrastructure de transport dans laquelle un moteur à induction d'entraînement (1) est commandé par le dispositif de commande d'au moins l'une des revendications 5 à 8.

# FIG. 1

EP 1 622 253 B1

# FIG. 2

EP 1 622 253 B1

EP 1 622 253 B1

# FIG. 3

# FIG. 4

(A) (COMPARATIVE EXAMPLE)

T
φ
Is

Vs
Ed
Edo
Po
P

Vsm ≒1. 45Edo

CONSTANT TORQUE CONTROL REGION    CONSTANT OUTPUT CONTROL REGION

(B) (FIRST EMBODIMENT)

T
φ
Edo
Is
Po

Vs
Ed
P1
P

Vsm ≒1. 45Edo

STRONG MAGNETIC FIELD CONTROL REGION .   MAGNETIC FIELD WEAKENING CONTROL REGION

0            BASE SPEED  START SPEED                    TOP SPEED
             $(\omega B)$   $(\omega 1=1. 37\omega B)$        $(\omega T)$

ROTATIONAL SPEED N
             $(\omega)$        (TORQUE CURRENT Iq: CONSTANT)

FIG. 5

# FIG. 6

(A)  (COMPARATIVE EXAMPLE)

T

φ

Vs

Vsm
≒1.45Edo

Ed

Edo

P

Is

Po

CONSTANT TORQUE CONTROL REGION    CONSTANT OUTPUT CONTROL REGION

(B)

Vs

Ed1

Vsm
≒1.45Edo

P1

T

Ed

φ

Edo

Is

Po

P

STRONG MAGNETIC FIELD CONTROL REGION

MAGNETIC FIELD WEAKENING
CONTROL REGION

0    BASE SPEED    START SPEED    MAXIMUM ROTATIONAL SPEED    TOP SPEED
     (ωB)    (ω1=1.28ωB)    (ω2=1.5ω1)    (ωT)

ROTATIONAL SPEED N
        (ω)    (TORQUE CURRENT Iq: CONSTANT)

# FIG. 7

START SPEED (ω1) LOW

BASE SPEED   START SPEED   MAXIMUM ROTATIONAL SPEED
(ωB) (ω1=1. 28ωB) (ω2=1. 5ω1)

ROTATIONAL SPEED N

OUTPUT P

**EP 1 622 253 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5796236 A
- US 3657623 A

- US 5965995 A

**Non-patent literature cited in the description**

- Denki Gakkai Gijutsu Hokoku. the Institute of Electrical Engineers of Japan, August 2003, 29